# EUROPEAN PATENT APPLICATION

(11) **EP 3 361 603 A1**
(43) Date of publication of application: **15.08.2018**
(21) Application number: 17155122.9
(22) Date of filing: 08.02.2017
(51) Int. Cl.: H02K 1/14, H02K 15/02

(54) **STATOR ASSEMBLY**

(71) Applicant: Win Global Electrical Appliance Limited, Kowloon (HK)
(72) Inventor: CHAN, Wing Hang, Kowloon (HK)
(74) Representative: Karakatsanis, Georgios

(57) **Abstract**

A stator assembly comprises a first core member (1) and a plurality of second core members. The first core member (1) comprises a first core member body (11), a plurality of cores (13) and a plurality of receiving recesses (15). Each of the cores (13) comprises a first yoke portion (311), a first tooth portion (312), a first coil and a first insulating bobbin. The second core member comprises a second yoke portion, a second tooth portion, a second coil and a second insulating bobbin. The first core member (1) is engageable with the plurality of second core members in a manner such that the second yoke portions are fixedly received in the receiving recesses respectively with each of the second core members arranged interposed between each adjacent pair of cores so that the arc-shaped ends of the first tooth portions (1) and the second tooth portions form an annular shape.

## Description

### Technical Field

The present invention relates to electric motors and more particularly pertains to a structure of a stator for use in electric motors.

### Background Art

Currently, during stator manufacturing process, stator windings are molded and thereafter inserted into stator groove manually. In this way, large amount of coils is required, and the productivity is low.

### Disclosure of the Invention

In view of the aforesaid disadvantages now present in the prior art, the object of the present invention is to provide a stator which is simple in structure, requires less coils and easier to manufacture.

To attain this, the present invention comprises
a first core member comprising a first core member body having a substantially circular center through hole, a plurality of cores integrally extended from an inner circumferential surface of the center through hole in an evenly spaced manner, and a plurality of arc-shaped receiving recesses provided along the inner circumferential surface of the center through hole, with each of the receiving recesses arranged between each adjacent pair of cores; each of the cores comprises a first yoke portion, a first tooth portion extending from the first yoke portion and having an arc-shaped end opposite the first yoke portion, and a first coil wound around a first insulating bobbin provided between the first coil and the first tooth portion;
a plurality of second core members, wherein each of the second core members comprises a second yoke portion which corresponds in shape and size to each of the receiving recesses, a second tooth portion extending from the second yoke portion and having an arc-shaped end opposite the second yoke portion, and a second coil wound around a second insulating bobbin provided between the second coil and the second tooth portion; each of the second core members is identical in shape and size to each of the cores of the first core member;
the first core member is engageable with the plurality of second core members in a manner such that the second yoke portions are fixedly received in the receiving recesses respectively with each of the second core members arranged interposed between each adjacent pair of cores so that the arc-shaped ends of the first tooth portions and the second tooth portions form an annular shape.

The first core member is engaged with the plurality of second core members by tight fitting the second yoke portions of the second core members to the receiving recesses of the first core member.

In one embodiment, each of the receiving recesses is disposed with a protrusion and each of the second core members is disposed with a groove corresponding to the protrusion at a circumferential edge of the second yoke portion for fixing of the second core member to the receiving recess.

In one embodiment, the arc-shaped receiving recesses and the corresponding arc-shaped ends of the second tooth portions are concentric with each other. In other embodiments, it is possible that the arc-shaped receiving recesses and the corresponding arc-shaped ends of the second tooth portions are not concentric with each other.

In one embodiment, there are four cores, four receiving recesses and four second core members.

In one embodiment, there are six cores, six receiving recesses and six second core members.

In one embodiment, there are eight cores, eight receiving recesses and eight second core members.

In one embodiment, there are ten cores, ten receiving recesses and ten second core members.

In one embodiment, the first core member body has an outer contour which is substantially square in shape; an installation hole is provided at each of the four corners of the first core member body for installing the stator assembly to a motor casing.

In one embodiment, the first core member body has an outer contour which is substantially round in shape for portions concentrically corresponding to the receiving recesses such that the outer contour is concentric with the receiving recesses, and the outer contour is planar in shape for portions not concentrically corresponding to the receiving recesses. In this case, the first core member tight fits in the inner surface of the motor housing and thus there is no need to provide any installation hole.

The stator assembly of the present invention is advantageous in that the coils are wound around the cores of the first core member and the second core members which are separated from each other before engaging with each other, thus reducing the amount of coils, simplifying the manufacturing process, increasing productivity and lowering manufacturing costs.

### Brief Description of Drawings

FIG. 1 is a front view of the stator assembly of the first embodiment with the first coils and the second coils removed.
FIG. 2 is a front view of the first core member of the first embodiment with the first insulating bobbin and the first coils removed.
FIG. 3 is a front view of the first core member of the first embodiment with the first insulating bobbin and the first coils.
FIG. 4 is a front view of one of the second core members of the first embodiment with the second insulating bobbin and the second coil thereof removed.
FIG. 5 is a front view of one of the second core members of the first embodiment with the second insulating bobbin and the second coil thereof.
FIG. 6 is a front view of the first insulating bobbin, which in the first embodiment is identical to the second insulating bobbin.
FIG. 7 is a perspective view of the first insulating bobbin as shown in FIG. 6.
FIG. 8 is another perspective view of the first insulating bobbin as shown in FIG. 6.
FIG. 9 is a perspective view of the stator assembly of the first embodiment being installed to a motor casing.
FIG. 10 is a front view of the stator assembly of the second embodiment with the first coils and the second coils removed.
FIG. 11 is a front view of the stator assembly of the third embodiment with the first coils and the second coils removed.
FIG. 12 is a front view of the stator assembly of the fourth embodiment with the first coils and the second coils removed.
FIG. 13 is a front view of the stator assembly of the fifth embodiment with the first coils and the second coils removed.
FIG. 14 is a front view of the stator assembly of the sixth embodiment with the first coils and the second coils removed.
FIG. 15 is a front view of the stator assembly of the seventh embodiment with the first coils and the second coils removed.
FIG. 16 is a front view of the stator assembly of the eighth embodiment with the first coils and the second coils removed.

### Best Mode for Carrying out the Invention

The present invention is further described in detail with the following embodiment and the accompanying drawings.

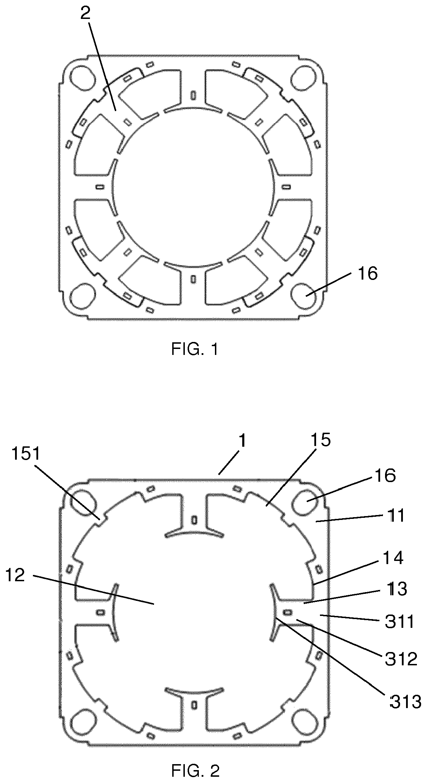

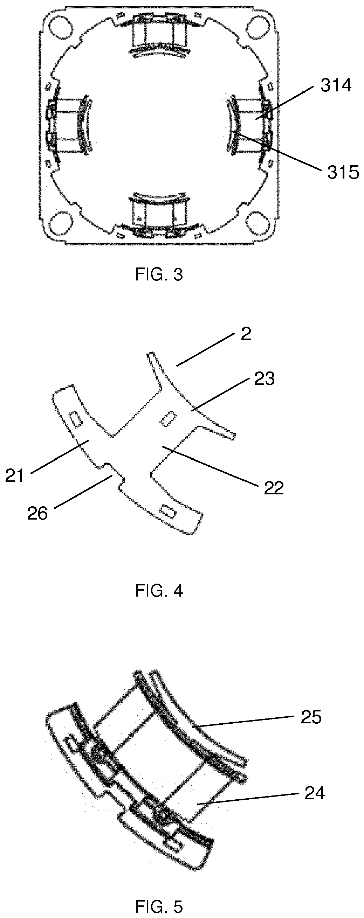

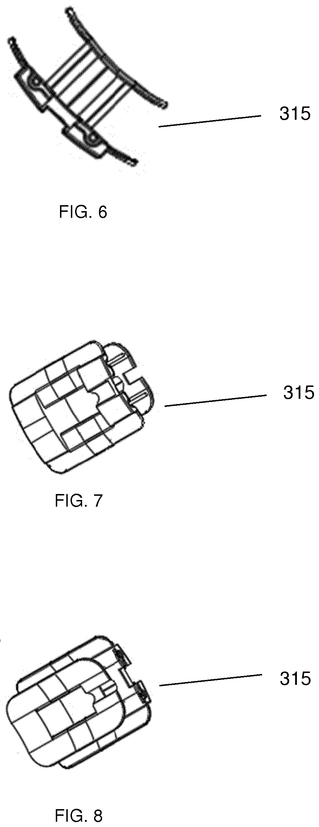

As illustrated in FIGs. 1-9, the stator assembly of the first embodiment comprises a first core member 1 and four second core members 2. The first core member 1 comprises a first core member body 11 having a substantially circular center through hole 12, four cores 13 integrally extended from an inner circumferential surface 14 of the center through hole 12 in an evenly spaced manner, and four arc-shaped receiving recesses 15 provided along the inner circumferential surface 14 of the center through hole 12, with each of the receiving recesses 15 arranged between each adjacent pair of cores 13; each of the cores 13 comprises a first yoke portion 311, a first tooth portion 312 extending from the first yoke portion 311 and having an arc-shaped end 313 opposite the first yoke portion 311, and a first coil 314 wound around a first insulating bobbin 315 provided between the first coil 314 and the first tooth portion 312. Each of the second core members 2 comprises a second yoke portion 21 which corresponds in shape and size to each of the receiving recesses 15, a second tooth portion 22 extending from the second yoke portion 21 and having an arc-shaped end 23 opposite the second yoke portion 21, and a second coil 24 wound around a second insulating bobbin 25 provided between the second coil 24 and the second tooth portion 22; each of the second core members 2 is identical in shape and size to each of the cores 13 of the first core member 1. The first insulating bobbin 315 and the second insulating bobbin 25 are identical in this embodiment. The structure of an insulating bobbin is well known in the prior art and is therefore not described in detail herein. The first core member 1 is engageable with the four second core members 2 in a manner such that the second yoke portions 21 are fixedly received in the receiving recesses 15 respectively with each of the second core members 2 arranged interposed between each adjacent pair of cores 13 so that the arc-shaped ends of the first tooth portions 312 and the second tooth portions 22 form an annular shape. In this embodiment, the gaps between the arc-shaped ends of each pair of first tooth portion 312 and second tooth portion 22 are approximately 2mm. In this embodiment, the first core member 1 is engaged with the four second core members 2 by tight fitting the second yoke portions 21 of the second core members 2 to the receiving recesses 15 of the first core member 1. Each of the receiving recesses 15 is disposed with a protrusion 151 and each of the second core members 2 is disposed with a groove 26 corresponding to the protrusion 151 at a circumferential edge of the second yoke portion 21 for fixing of the second core member 2 to the receiving recess 15. The arc-shaped receiving recesses 15 and the corresponding arc-shaped ends 23 of the second tooth portions 22 are concentric with each other. In other embodiments, it is possible that the arc-shaped receiving recesses and the corresponding arc-shaped ends of the second tooth portions are not concentric with each other. In this embodiment, the first core member body 11 has an outer contour which is substantially square in shape; an installation hole 16 is provided at each of the four corners of the first core member body 11 for installing the stator assembly to a motor casing 3.

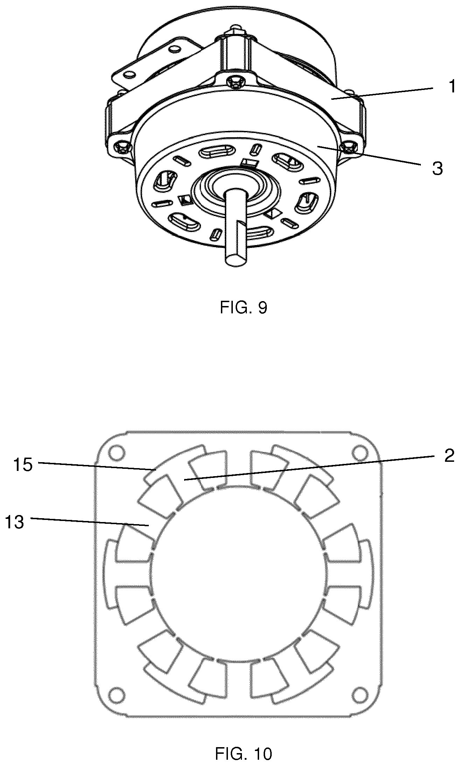

FIG. 10 illustrates the stator assembly of the second embodiment. The second embodiment is substantially the same as the first embodiment except for the following: in this embodiment, there are six cores 13, six receiving recesses 15 and six second core members 2.

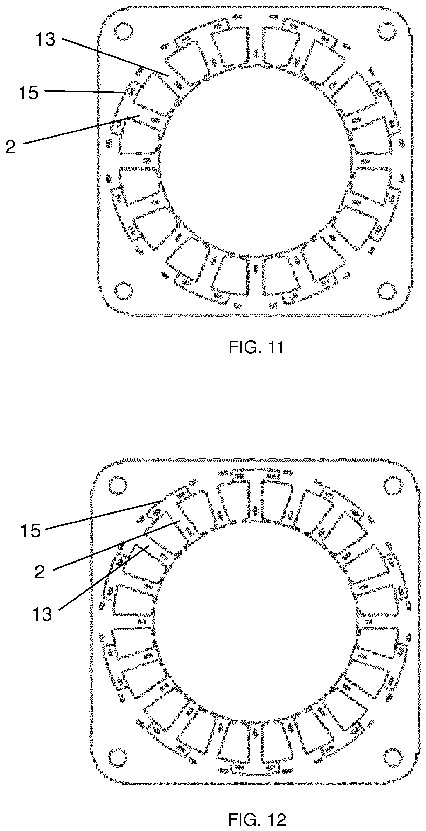

FIG. 11 illustrates the stator assembly of the third embodiment. The third embodiment is substantially the same as the first embodiment except for the following: in this embodiment, there are eight cores 13, eight receiving recesses 15 and eight second core members 2.

FIG. 12 illustrates the stator assembly of the fourth embodiment. The fourth embodiment is substantially the same as the first embodiment except for the following: in this embodiment, there are ten cores 13, ten receiving recesses 15 and ten second core members 2.

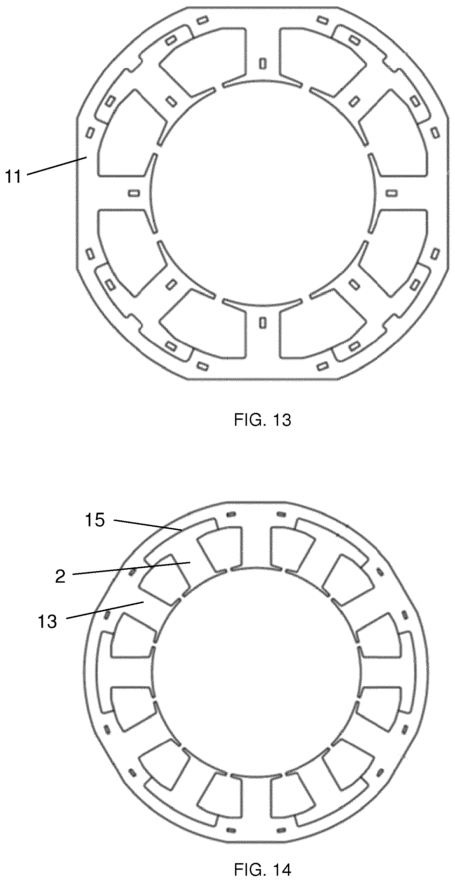

FIG. 13 illustrates the stator assembly of the fifth embodiment. The fifth embodiment is substantially the same as the first embodiment except for the following: in this embodiment, the first core member body 11 has an outer contour which is substantially round in shape for portions concentrically corresponding to the receiving recesses such that the outer contour is concentric with the receiving recesses, and the outer contour is planar in shape for portions not concentrically corresponding to the receiving recesses. In this case, the first core member tight fits in the inner surface of the motor housing and thus there is no need to provide any installation hole.

FIG. 14 illustrates the stator assembly of the sixth embodiment. The sixth embodiment is substantially the same as the fifth embodiment except for the following: in this embodiment, there are six cores 13, six receiving recesses 15 and six second core members 2.

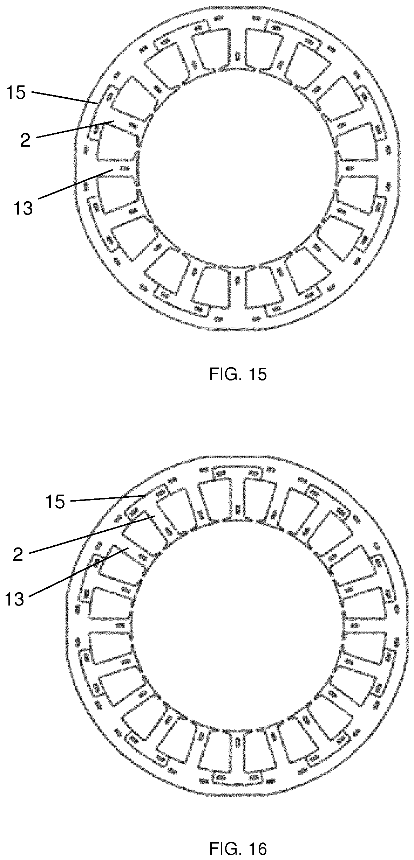

FIG. 15 illustrates the stator assembly of the seventh embodiment. The seventh embodiment is substantially the same as the fifth embodiment except for the following: in this embodiment, there are eight cores 13, eight receiving recesses 15 and eight second core members 2.

FIG. 16 illustrates the stator assembly of the eighth embodiment. The eighth embodiment is substantially the same as the fifth embodiment except for the following: in this embodiment, there are ten cores 13, ten receiving recesses 15 and ten second core members 2.

The above embodiments are preferred embodiments of the present invention. The present invention is capable of other embodiments and is not limited by the above embodiments. Any other variation, decoration, substitution, combination or simplification, whether in substance or in principle, not deviated from the spirit of the present invention, is replacement or substitution of equivalent effect and falls within the scope of protection of the present invention.

## Claims

1. A stator assembly comprising
a first core member comprising a first core member body having a substantially circular center through hole, a plurality of cores integrally extended from an inner circumferential surface of the center through hole in an evenly spaced manner, and a plurality of arc-shaped receiving recesses provided along the inner circumferential surface of the center through hole, with each of the receiving recesses arranged between each adjacent pair of cores; each of the cores comprises a first yoke portion, a first tooth portion extending from the first yoke portion and having an arc-shaped end opposite the first yoke portion, and a first coil wound around a first insulating bobbin provided between the first coil and the first tooth portion;
a plurality of second core members, wherein each of the second core members comprises a second yoke portion which corresponds in shape and size to each of the receiving recesses, a second tooth portion extending from the second yoke portion and having an arc-shaped end opposite the second yoke portion, and a second coil wound around a second insulating bobbin provided between the second coil and the second tooth portion; each of the second core members is identical in shape and size to each of the cores of the first core member;
the first core member is engageable with the plurality of second core members in a manner such that the second yoke portions are fixedly received in the receiving recesses respectively with each of the second core members arranged interposed between each adjacent pair of cores so that the arc-shaped ends of the first tooth portions and the second tooth portions form an annular shape.

2. The stator assembly as in Claim 1, wherein the first core member is engaged with the plurality of second core members by tight fitting the second yoke portions of the second core members to the receiving recesses of the first core member.

3. The stator assembly as in Claim 1, wherein each of the receiving recesses is disposed with a protrusion and each of the second core members is disposed with a groove corresponding to the protrusion at a circumferential edge of the second yoke portion for fixing of the second core member to the receiving recess.

4. The stator assembly as in Claim 1, wherein the arc-shaped receiving recesses and the corresponding arc-shaped ends of the second tooth portions are concentric with each other.

5. The stator assembly as in Claim 1, wherein there are four cores, four receiving recesses and four second core members.

6. The stator assembly as in Claim 1, wherein there are six cores, six receiving recesses and six second core members.

7. The stator assembly as in Claim 1, wherein there are eight cores, eight receiving recesses and eight second core members.

8. The stator assembly as in Claim 1, wherein there are ten cores, ten receiving recesses and ten second core members.

9. The stator assembly as in Claim 1, wherein the first core member body has an outer contour which is substantially square in shape; an installation hole is provided at each of the four corners of the first core member body for installing the stator assembly to a motor casing.

10. The stator assembly as in Claim 1, wherein the first core member body has an outer contour which is substantially round in shape for portions concentrically corresponding to the receiving recesses such that the outer contour is concentric with the receiving recesses, and the outer contour is planar in shape for portions not concentrically corresponding to the receiving recesses.
